(19) Europäisches Patentamt
European Patent Office
Office européen des brevets

(11) EP 1 816 178 A1

(12) EUROPEAN PATENT APPLICATION

(43) Date of publication:
08.08.2007 Bulletin 2007/32

(51) Int Cl.:
*C09K 11/02* (2006.01) *C09K 11/08* (2006.01)

(21) Application number: 06002045.0

(22) Date of filing: 01.02.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(71) Applicant: POLYNT GmbH & Co. KG
56357 Miehlen (DE)

(72) Inventors:
- Busam, Nicole
56357 Miehlen (DE)
- Türk, Oliver
55437 Ockenheim (DE)
- Vargiolu, Giovanni
56341 Filsen (DE)
- Weber, Simone
55437 Ockenheim (DE)

(74) Representative: Riegler, Norbert Hermann et al
Lonza AG
Patentabteilung
Postfach
4002 Basel (CH)

# (54) Molding compounds containing luminescent pigments

(57) The object of the invention is a luminescent molding compound, preferably a sheet molding compound (SMC) for a molding process at elevated temperature and pressure, comprising a thermosetting resin, transparent reinforcing fibers, a photoluminescent pigment dispersed in the thermosetting resin so as to form a homogenously pigmented SMC, a thickening agent, and optionally one or more of transparent fillers, thermoplastics, initiators for radical polymerization of the resin, inhibitors for stabilization of the compound and internal mold releases. A further object of the invention is a finished part obtainable by molding and curing the molding compound, which article has mechanical properties and luminescence sufficient e.g. for application in the equipment, especially safety equipment, of safety personnel, fire brigades, police and the like.

Fig. 4

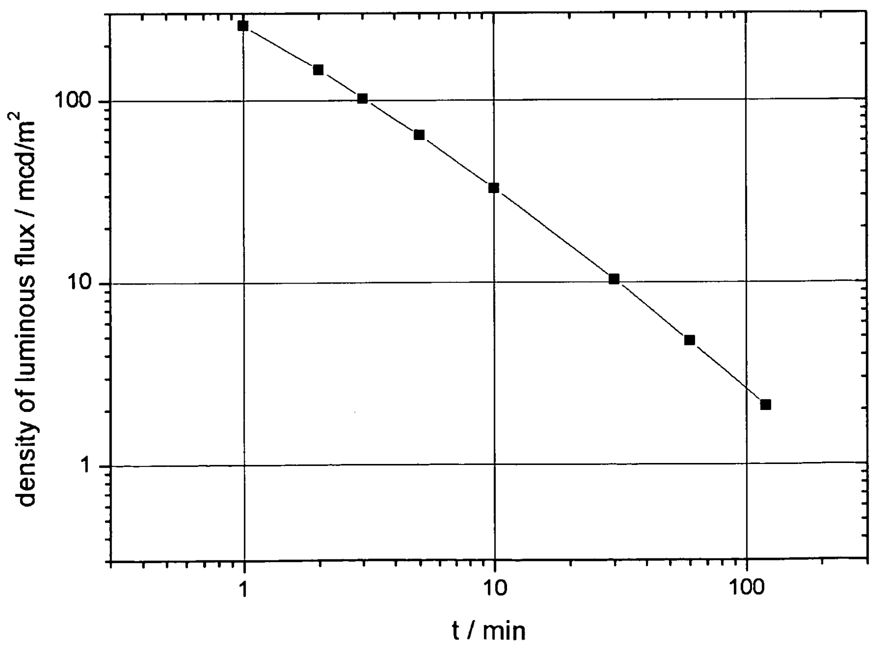




Printed by Jouve, 75001 PARIS (FR)

## Description

The present invention relates to a luminescent molding compound. Molding compounds, and in particular sheet molding compounds, henceforth abbreviated as SMC, consist mainly of reinforcing fibers (e.g., glass fibers), a thermosetting resin suitable to form a reinforced polymer system with the fibers, usually one or more fillers, thickening agent (s) and mold release agent(s). In the following text for convenience and ease of reading only SMC will be addressed. The object of the invention however comprises not only sheet molding compounds (SMC) but also thick molding compounds (TMC) and bulk molding compounds (BMC).

Generally, luminescence is the non-thermal emission of light after absorption of energy. The energy absorbed by the luminescent system or material leads to an excited electronic state that possesses a certain lifetime. After this lifetime which is typical for the type of material the system returns to its electronic ground state by emitting light of a certain wavelength. Depending on the type of activation one distinguishes photoluminescence, electroluminescence, thermoluminescence, and chemoluminescence. More information about these processes can be found e.g. in Römpp Chemie-Lexikon (Eds. J. Falbe, M. Regitz; Thieme-Verlag, Stuttgart, 1995) or common textbooks of physics or chemical physics.

The use of luminescent pigments in thermoplastic materials has been described in numerous patent publications:

US 4,759,453 A describes the use of a luminescent plastic band to produce a baby bottle marked with a luminescent ring.

US 5,692,895 A describes a luminescent orthodontic bracket consisting of metal, ceramics or thermoplastic polycarbonate.

EP 0 416 436 A1 discloses filler-containing luminescent thermoplastic materials like mixtures of polyamides and polyphenylene ethers with ZnS as white color pigment.

WO 01/94496 A1 describes a thermoplastic masterbatch system with "glow-in-the-dark"-effect and a high daylight visibility. The system consists of a colorant providing intense daylight color and a luminescent pigment providing afterglow which is not quenched by the daylight colorant. The thermoplastic matrix can be formed e.g. by polyurethane, polyolefin, acrylic, ABS, polyester or polycarbonate.

US 5,374,377 A teaches the use of phosphorescent polyvinyl chloride films containing a primary and secondary plasticizer, a primary and secondary stabilizer and a phosphorescent pigment which is preferably a zinc sulfide phosphor.

Luminescent elastomeric systems have also been described:

In WO 01/00748 A1 the use of luminescent latex mixtures is taught, e.g. for the production of luminescent balloons and the like. Moreover, said patent describes a luminescent ink suitable for printing on latex articles.

There are also some patents describing luminescent thermosetting systems:

WO 01/60943 A1 teaches the use of thermosetting resins with properties between those of typical polyester resins for gel coats, polyester laminating resins, and polyester casting resins. These resins are used as a base for a system for the production of gel coated, laminated, cast or molded articles showing photoluminescence, thermoluminescence or electroluminescence. Further main components of the resin system are fillers and luminescent pigments. Only cold-curing processes are addressed in said patent. A key point in the applications described is the problem of keeping the luminescent pigments in suspension during storage and use, as the densities of the pigments are in the range of 3.5 to 4 g/$cm^3$. This problem is overcome by addition of fillers like silicon dioxide that help to keep the pigments in suspension.

Another key point is the surface quality of parts: In molded parts surfaces can show a fiber pattern caused by shrinkage of the resin in the curing process. It is possible to overcome this problem in cold-curing processes by the use of a gel coat. In WO 01/60943 A1 almost exclusively gel coated articles are described. The gel coat consists of a pigmented but not reinforced polyester resin that gives the finished part a glossy appearance.

Adding luminescent pigments to gel coats can lead to a problem of phase separation - especially when pigments of the zinc sulfide type are used. WO 01/60943 A1 discloses gel coats which do not show this effect due to the use of thixotropic agents like colloidal silica.

The related patents US 6,599,444 B2 and US 6,905,634 B2 describe an electroluminescent polymer comprising a thermosetting polyester, a suspending filler and an electroluminescent pigment. In addition to an electroluminescent polymer layer the device described in said patents comprises a transparent layer and a layer which is made conductive by the use of conductive fillers or fibers like stainless steel fibers. The use of luminescent resin systems in silk printing and screen printing processes is also described.

In WO 01/60943 A1 and the related patents luminescent molded articles are produced in processes like hand lay-up, spray-up or resin transfer molding, i.e. in so-called open mold processes where there is no flow of the material in a mold.

The most common method to manufacture luminescent molded articles is painting with luminescent paint:

GB 723,967 teaches improvements in luminous signs which can be manufactured in metal, plastic or even plaster of Paris. After molding the sign can be treated with a foundation coat and afterwards with a luminescent paint.
US 6,186,634 B 1 describes a luminescent handheld lighting device with a thermoplastic body and a luminescent coating. To protect the luminescent coating from wear and tear it is covered with a second layer of transparent paint.
Molded articles can also be painted with a luminescent paint instead of using a luminescent gel coat. A typical application are firemen's helmets where a shell is obtained by molding SMC which is unpigmented or pigmented with non-luminescent pigments. The non-luminescent shell made of standard SMC is painted with a luminescent paint before the helmet is completed with belt, visor, etc.
Products of this type are commercially available from several companies.
However it is known that the luminescent paint quickly begins to show signs of wear and tear, especially at the edges of the molded article, since the paint is brittle.
Moreover, the luminescent paint itself is not flame retardant. If the helmet material is made flame retardant, e.g. with aluminum trihydroxide, the inflammability of the outer helmet surface is worse than that of the helmet shell itself.

DE 100 47 677 A1 describes a luminescent coating material wherein a transparent organic binder contains luminescent fibers. The coating described in said patent can be used for identification purposes.

Prior art does not teach the use of luminescent pigments in Sheet Molding Compounds (SMC) for a molding process at elevated temperature and pressure to mold self luminescent parts in an industrial process where high production numbers per year are feasible.

Producing laminated articles with a luminescent gel coat or the treatment of non-luminescent molded parts with a luminescent paint is a laborious and cost intensive process. Moreover, luminescent paint films are more easily inflammable than molded articles containing flame-retardant fillers.

Accordingly, the problem to be solved by the present invention was to provide thermosetting molding compounds, in particular sheet molding compounds, which can be molded at elevated temperature into inherently luminescent articles with surface quality sufficient for an application as e.g. safety equipment of safety personnel, fire brigade, police and the like, without using requiring additional production steps such as application of luminescent paints or gel coats. More particularly, it is an object of the present invention to provide a self-luminescent sheet molding compound (SMC) which is flame retardant and with which self-luminescent articles can be molded that possess also flame retardance on the surface as there is no inflammable paint.

Sheet molding compounds (SMC) provide fiber reinforced thermosetting resins in a form which allows to process these reinforced resins in a molding process at elevated temperature and pressure in industrial applications where parts can be molded economically in the order of magnitude from several thousands up to several millions of pieces per year. The annual production of SMC is in Europe around 264 000 t/a, in the U.S.A. 292 000 t/a, 194 000 t/a in Asia and worldwide 752 000 t/a.
International standard ISO 8605 "Textile glass reinforced plastics - Sheet molding compound (SMC) - Basis for a specification" describes SMC in a classification based on the composition of the material as consisting fundamentally of

- resin (matrix)
- reinforcement(s)
- fillers
- additives

Moreover, in this classification also the modes of reinforcement are specified.

To obtain a SMC applicable in practice the following ingredients are necessary or useful to form a basic SMC:

1) thermosetting resin
2) reinforcement fibers
3) thickening agent

The following additional ingredients are not absolutely necessary, but quite common:

4) initiator (curing agent)
5) inhibitor (stabilizing agent)

6) mold release agent

Commonly, however, further ingredients are used, e.g.:

7) fillers
8) shrinkage modifiers (thermoplastic low profile additives, compensation of resin shrinkage)
9) colorants/pigments
10) further additives (e.g. for wetting, dispersing, air release, etc.)

In the following these ingredients are described in more detail.

**1) Thermosetting resins**

As thermosetting resins, i.e. matrix material, in SMC applications unsaturated polyesters (UP), epoxy resins (EP), polyurethane resins (PUR), phenolic resins (P) and vinyl ester resins (VE) can be used. Mostly, UP resins and VE resins are used in the production of SMC.
Depending on the required properties of the SMC or the molded parts, different combinations of bivalent alcohols and bivalent unsaturated acids or the corresponding anhydrides can be used to form unsaturated polyesters by polycondensation:
Typical acids or anhydrides used in production of UP resins are

- phthalic acid/phthalic anhydride
- isophthalic acid
- terephthalic acid
- maleic acid/maleic anhydride

Typical alcohol components are

- 1,2-ethanediol (ethylene glycol)
- 1,2-propanediol (1,2-propylene glycol)
- 1,3-propanediol (1,3-propylene glycol)
- 1,3-butanediol
- 1,4-butanediol
- 2,2-dimethyl-1,3-propanediol (neopentyl glycol, NPG)

where simple, linear glycols are mostly considered as standard glycols.
For special applications, special combinations of acids and alcohols are used, e.g. isophthalic acid and neopentyl glycol form an unsaturated polyester (ISO/NPG) with enhanced chemical resistance and especially weathering resistance, as compared to a standard resin prepared from phthalic acid and standard glycols. Resins of this type are used in applications like e.g. trays which are exposed to elevated temperature and alkaline conditions in dishwashers, or exterior parts of vehicles where weathering resistance is of importance.
Typical vinyl esters are those of the novolac type and those of the bisphenol A type, the basic chemistry of which is known to those skilled in the art. VE resins are mostly used to form SMC for application in parts where temperature resistance and/or chemical resistance is required, e.g. in automotive parts like oil sumps and valve covers for internal combustion engines.
Unsaturated polyester or vinyl ester resins are typically dissolved in a monomer possessing a vinyl group like e.g. styrene. The monomer participates in the polymerization reaction of the unsaturated polyester or vinyl ester started by the initiator (radical polymerization). By this copolymerization of the monomer and the thermosetting resin a three dimensional network is formed (crosslinking).
Due to the polymerization reaction of the double bonds in the unsaturated polyester and especially the copolymerization of the vinyl group containing monomer (styrene) the cured resin exhibits a shrinkage of about 8-10%.

**2) Reinforcement**

As reinforcement many materials can be used. The classical way of reinforcing a thermosetting resin is the usage of glass fiber bundles, so called rovings. Until today this is the predominant way of reinforcement of thermosetting resins in SMC, but thermoplastic materials may also be reinforced with glass fibers.
In the glass fiber roving several single filaments of glass fibers having a diameter of approximately 10 to 20 μm are

bound together to form a bundle. The roving may consist of a single bundle or (preferably) of several bundles. It is important to note in the context of the present invention the parameters describing the elementary properties of such glass fiber rovings which are the diameter of the elementary fiber, the weight of the bundle per meter, which is expressed by the bundle tex number, and the weight of the complete roving per meter, which is expressed by the tex number of the roving. The tex number is given in milligrams per meter.
The fiber diameter of the elementary fiber is preferably in the range of 11 to 16 μm (for glass fibers).
The bundle weight which is given by the bundle tex number is typically in the range of 60-90.
The roving weight which is given by the roving tex number is typically 2400 tex but 4800 tex rovings can also be used.
The single filaments can only form the above-mentioned bundles by the use of a sizing which is applied onto the glass fibers during their production. The sizing is a liquid mixture of several components like an antistatic agent, a film former, a lubricant, and a silane coupling agent which facilitates the interaction or coupling, respectively, between the glass fiber surface and the unsaturated polyester. Only the sizing ensures the processability of the glass fibers in the SMC process; glass fibers without sizing are not processable due to the formation of fluff.
It is evident that the chemical composition and especially the solubility of the sizing determines the defilamentation of the glass fiber bundle in the SMC and/or during molding.
A high solubility of the sizing leads to a good defilamentation of the fiber bundles and therefore to good mechanical properties of the molded part. However, mold flow is adversely affected.
On the other hand, a low solubility of the sizing results in poor defilamentation and poor mechanical properties of the molded part while mold flow is facilitated.
When a very good dispersion of the glass fiber bundles in the SMC is desired - e.g. to achieve a transparent and homogeneous SMC - it is mandatory to use glass fibers with a sizing having a high solubility.
Apart from glass fiber reinforcements also carbon fibers, aramid fibers (polyamide), basalt fibers (geotextile fibers) or natural fibers like hemp, flax, jute and the like can be used.
The reinforcement can also consist of nonwoven (e.g., fleeces) or woven fabrics (multi-layered or single layered) of one or a mixture of two or more types of the above mentioned reinforcement fibers.

### 3) Thickening agents

The thickening process or maturation can be considered to be the fundamental step in the SMC process. Only the thickening makes the SMC an SMC, i.e. an easy to handle and applicable sheet of fiber-reinforced thermosetting resin that is not sticky and can be cut into a desired shape and which can be placed in a mold for molding parts of a desired form at elevated temperature and pressure.
The thickening makes use of a reaction of the terminal acid groups of the unsaturated polyester chain with an alkaline earth oxide or hydroxide. By that reaction that can be called a bridging reaction, polyester chains with a higher molecular mass are formed and the viscosity rises accordingly. The water formed during that reaction builds up hydrogen bonds with neighboring polyester chains - a process by which the molecular mass is increasing even more. Thickening reactions in Schemes 1 to 4 below are given according to Hamid G. Kia, "Sheet Moulding Compounds - Science and Technology", Hanser Publishers, Munich, 1993.

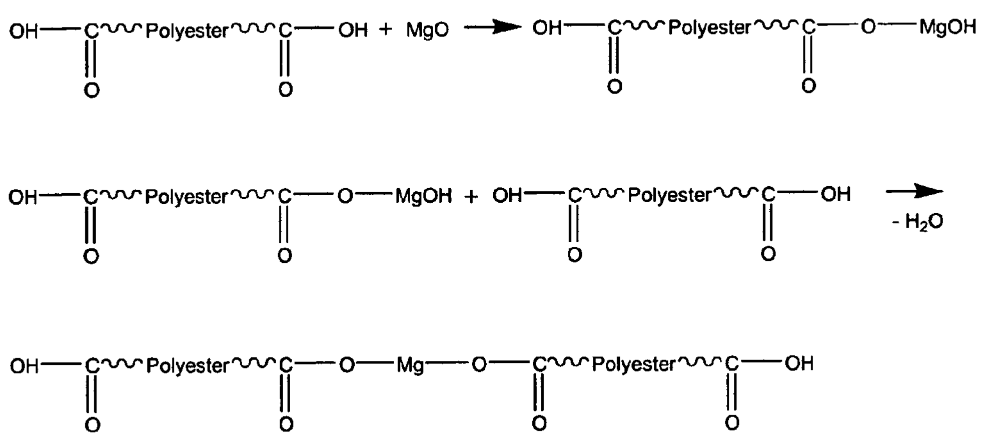


**Scheme 1:** Thickening reaction of polyesters with alkaline earth oxides, here MgO. One mole of water is formed in the bridging of two terminal carboxyl groups of the polyester.

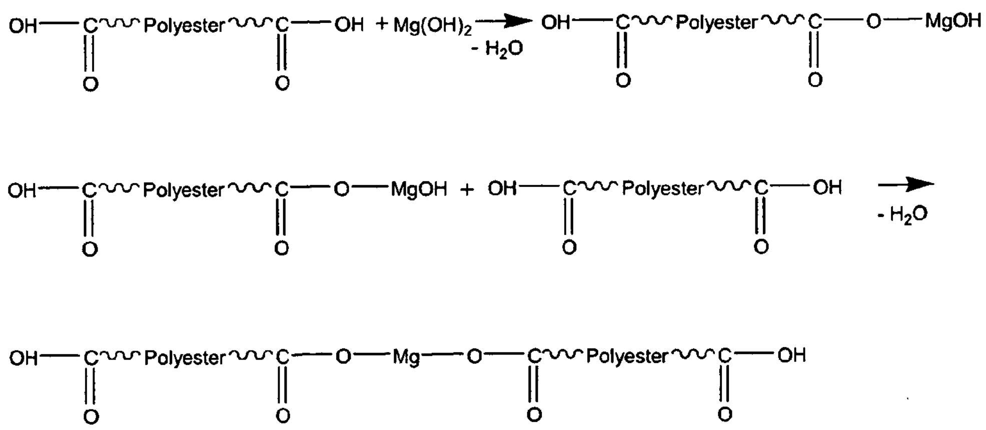


**Scheme 2:** Thickening reaction of polyesters with alkaline earth hydroxides, here $Mg(OH)_2$. Two moles of water are formed in the bridging of two terminal carboxyl groups of the polyester.

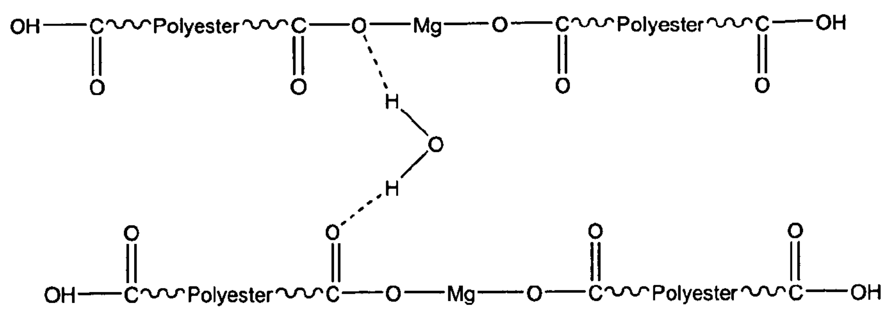

**Scheme 3:** Hydrogen bonding between water (formed in the bridging reaction or contained e.g. in fillers or other ingredients) and carbonyl and ether oxygen atoms. By this hydrogen bonding the density of the network is increased and the viscosity of the resin systems rises accordingly.

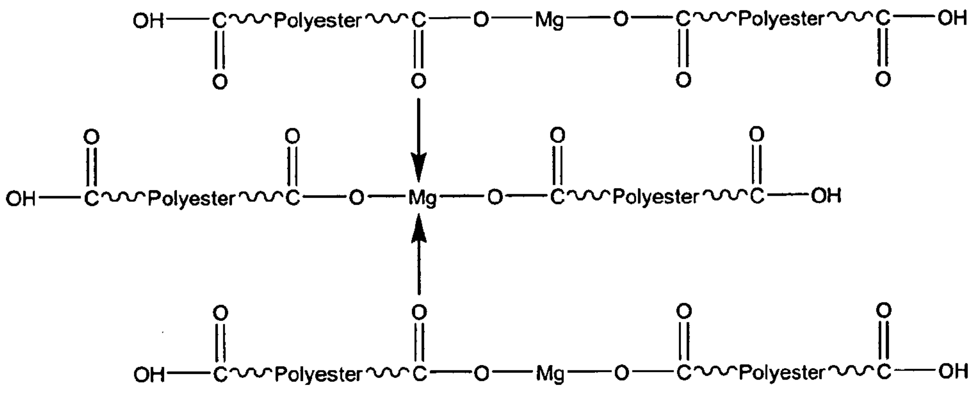

**Scheme 4:** Formation of complexes between carbonyl atoms in the polyester chain and the alkaline earth metal atom in a neighbored polyester chain. By this complex building reaction the density of the network is increased and the viscosity of the resin systems rises accordingly.

The molecular masses (given by the number average) of unsaturated polyester resins and vinylester resin can be in the range of 500 to 5000 g/mol. Typically, UP resins possess molecular masses of 1800-2200 g/mol and VE resins molecular masses of 800-1000 g/mol. The viscosity of such resins is usually in the range of 0.6 to 6 Pa·s. This corresponds approximately to the viscosity of honey.

The viscosity of the resin paste, where the resin paste is understood to be the mixture of the thermosetting resin with all further ingredients with exception of the pigment paste and the thickening agent which form together the color paste is typically in the range of 10 Pa·s to 50 Pa·s.

The thickening process increases this viscosity of the resin paste from this level of 10 Pa·s to 50 Pa·s (cf. Fig. 1) to a viscosity level of approximately $5\times10^4$ to $1\times10^5$ Pa·s which is usually reached after two days. It gives the SMC a leatherlike appearance and enables the operator to cut the SMC into pieces of desired size, remove the carrier film without resin sticking to the film or to the hands of the operator, and to put the pre-cut SMC sheets into the mold.

During molding the viscosity level of the thickened thermosetting resin is lowered again significantly due to the influence of the temperature in the mold. This effect allows the resin paste to flow in the mold and to completely fill the cavity within the comparatively short time of the molding process. However, in order to assure the transport of the glass fibers by the resin paste is necessary to retain a certain level of thickening. If the thickening level is too low due to incorrect formulation of the SMC, inadequate maturation conditions, or inappropriate storage of the SMC, glass transport during molding is incomplete and the edges of the molded part show a lack of glass fibers which leads to unsatisfactory mechanical properties in the edge regions of the molded part or even breakages during demolding or deflashing.

Too high a thickening level can also lead to problems as the cavity of the mold cannot be filled completely with the reinforced thermosetting resin during the molding process. The result are molded parts showing defects on their edges.

The above makes clear that the thickening process is the central step in the SMC production which only makes the SMC easily applicable as expected by customers.

This is also expressed by the definitions given in standard ISO 8604: "Plastics-Prepregs-Definitions of terms and symbols for designations":

In section 3.1.2 a "thermosetting molding material" is defined as "a material capable of being changed into a substantially infusible and insoluble product when cured by heat or by other means, such as radiation, catalysts, etc."

In section 3.3.5 a "sheet molding compound (SMC)" is defined as "a product composed of thoroughly mixed resins and chopped or unchopped reinforcing fibers, with or without particulate fillers, produced in sheet form in thickness generally from 1 to 25 mm, capable of being molded or laminated under heat and pressure. NOTE: In sheet molding compounds, high viscosity by chemical thickeners".

This means that the thickening is a substantial part or better an inherent property of a SMC. The same holds for TMC and BMC as given in the standard ISO 8604:

In section 3.3.6 a "thick molding compound (TMC)" is defined as a "sheet molding compound in thickness above 25 mm. NOTE: In thick molding compounds, high viscosity by chemical thickeners."
Finally, in section 3.3.7 a "bulk molding compound (BMC)" is defined as "a product composed of thoroughly mixed resins and chopped or unchopped reinforcing fibers, with or without particulate fillers, produced in mass form, capable of being molded under heat and pressure. NOTE: In bulk molding compounds, high viscosity by chemical thickeners."
It is evident to those skilled in the art that without chemical thickeners or the thickening reaction, respectively, Sheet Molding Compounds are not possible.

It is important to note in this context that in practice there are thickenable and non-thickenable resins. In principle, the thickening reaction can occur in every polyester resin as there are always some carboxyl and hydroxyl groups. However, for the thickening a certain increase in molecular mass is necessary.
That means that the molecular weight distribution (molecular mass), the acid number, the hydroxyl number and the water content determine whether a resin is thickenable or non-thickenable.
This difference is important to note as it is impossible to use e.g. magnesium hydroxide as flame retardant filler in a thickenable resin as the viscosity increase would be too high and the handling and mold flow properties of the SMC would suffer.

**4) Initiators**

Initiators are radical forming substances that are stable up to a certain temperature. Above said temperature initiators decompose quickly. Derivatives of hydrogen peroxide wherein one or both hydrogen atoms are replaced by an organic group, e.g. di-*tert*-butyl peroxide and the like, are used most commonly. Up to the temperature of thermal decomposition only a small amount of free radicals is formed that can be scavenged by an inhibitor (see below). Above this temperature the rate of formation of free radicals is so high that the curing of the polyester or vinyl ester resin takes place via radical copolymerization of the double bonds in the resin and the reactive monomer.

**5) Inhibitors**

To prevent gelation of the resin used in the SMC before curing in the mold, inhibitors are used that can scavenge certain amounts of free radicals per time unit, thereby making it possible to adjust and guarantee the shelf life of the SMC. Moreover, as inhibitors intercept a certain proportion of the radicals, the reactivity of the SMC and the height of the peak exotherm, i.e. the peak temperature reached during the curing process (see Fig. 2) are also adjusted, thus making it possible to adjust the molding behavior in terms of mold flow and curing properties.

**6) Mold release agents**

Internal mold release agents are used to facilitate demolding, i.e. removing the molded part from the hot mold. Mainly stearates of zinc (for lower molding temperatures) and calcium (for higher molding temperatures) or mixtures of both are used. In some cases also liquid mold release agents are used, some of them possessing also properties of process additives (cf. section 8 below).
The six ingredients described above basically constitute an SMC, i.e. a sheet of fibers impregnated with a thermosetting resin paste which has a surface that is not sticky and which can be cut into pieces and readily molded into parts of desired size, shape, and complexity. To achieve the desired properties of the SMC and the molded parts, further ingredients can be used, namely:

**7) Fillers**

With fillers several desired properties can be introduced in the SMC. One fundamental effect of the addition of fillers is a compensation of the shrinkage of the resin which is usually in the range of 8% to 10%, depending on the chemical nature of the resin (see above). As the inorganic filler does not take part in the polymerization reaction, it expands during molding due to the temperature of the mold or heat of reaction and adopts its former volume on cooling down after the molding process.
As the thermosetting resin is cross-linked at high temperature, the fillers partially act like a shrinkage compensating thermoplastic additive (see below), whereby they can improve the surface quality of the molded parts.
Furthermore, fillers can also improve the mechanical properties of the finished parts.

Nanofillers are fillers with a particle size below 100 nm; they can significantly improve the mechanical properties of molded parts although their homogenous dispersion in the resin is difficult to achieve and the viscosity of the resin may be influenced adversely.
Other properties of the finished parts can also be achieved or adjusted with the help of fillers, e.g. conductive SMC can be made using conductive fillers like carbon black and the like.
Fillers can be coarsely crystalline or finely comminuted (e.g., ground crystals or minerals). Most fillers, especially ground materials, possess a whitish color and lead to poor transparency of the SMC or the molded part.

In sheet molding compounds which need to be flame retardant, fillers play a significant role as a high flame retardance can be achieved e. g. by the addition of aluminum trihydroxide (ATH). On heating, aluminum trihydroxide decomposes according to the formula:

$$2\ Al(OH)_3 \xrightarrow{\Delta T} Al_2O_3 + 3H_2O$$

This reaction has two important effects: Firstly, the compound is cooled by the vaporization of water and secondly, the flame is extinguished by the water vapor which lowers the oxygen concentration.
SMC can be filled with ATH to a very high degree which renders the SMC highly flame retardant. Such flame retardant SMC can meet even the very demanding standards valid for railway industry like British Standard 6853 Class Ib or the new European Standard EN 45545.

**8) Additives**

Additives can perform very different tasks:

Wetting additives lead to a better wetting of the fibers by the resin paste.
Dispersants lead to a better dispersion of pigments and fillers in the resin paste.
Anti-separation additives stabilize the resin paste and prevent segregation of the ingredients like fillers and pigments.
Processing additives stabilize the compound and can improve the mold flow properties.
Viscosity reducing additives reduce the viscosity of the resin paste and facilitate the processing of the paste in the SMC production and lead to a better impregnation of the fibers.
Air release additives reduce the air loading of the resin paste and improve the impregnation of the fibers.

**9) Shrinkage modifiers**

Shrinkage modifiers are thermoplastic materials generally divided into low shrink (LS) and low profile (LP) additives. Commonly, polymers such as e.g. polyethylene, polypropylene, polystyrene, saturated polyesters, polyvinyl acetate and the like are used.
By thermal expansion during molding, thermoplastic additives lead to an increased surface quality in terms of smoothness as the cross-linking of the thermosetting resin "freezes" the expanded state in which the thermoplastics are at elevated temperature; thereby compensating the shrinkage of the pure resin and rendering the surface profile of the finished part more homogenous and free from sink marks or fiber print.
Saturated polyesters in combination with polyvinyl acetates do not only compensate the shrinkage of the pure resin, they "overcompensate" shrinkage and lead to an expansion of up to 0.05%. This is a prerequisite for the use of such formulations for the molding of parts for car exterior application, known as Class-A materials.

**10) Pigments**

Pigments, usually in the form of pigment pastes, are used to produce colored SMC which can be molded to colored parts. Important properties of pigment pastes are suitable particle size or particle size distribution of the pigments and good homogeneity of both the pigment paste itself and the colored resin paste, i.e. the thermosetting resin mixed with all fillers and additives and finally the color paste. Moreover, it is important to have a good compatibility of the resin paste and the pigment paste. Finally, the coverage of the reinforcing fibers in the finished part has to be complete.
Pigment pastes to produce colored SMC are usually obtained by mixing pigment pastes of basic colors like red, yellow, blue, and black. With these mixtures e.g. most grey colors can be produced. Occasionally, other pigment pastes like green, brown, purple, bordeaux, and the like are also used to produce more special colors in the SMC. Pigment pastes are commercially available and are dispersions of suitable organic or inorganic pigments in non-thickenable carrier

resins. Besides the chemical constitution of the pigments their physical properties like crystal form, particle size, and particle size distribution are of importance for their coloristic applicability and properties. Pigment producers try to obtain primary particles of optimum size and to inhibit agglomeration of these primary particles.

To achieve a better coverage of the reinforcing fibers in the molded parts and sometimes also to achieve a better fine tuning of the color itself, pastes of white pigments are used that are typically dispersions of ZnS and/or $BaSO_4$ pigments in non-thickenable carrier resins. These white pigment pastes are not always used, but in most cases they improve the appearance of the color, especially its homogeneity, brightness and purity. Moreover, the sizings of glass fibers tend to render the SMC somewhat yellowish and this effect is also partially overcome by the use of white pigment paste.

Particle sizes of the pigments are an important issue in connection with the color homogeneity. Typical particle sizes of commonly used pigments are given in terms of $d_{50}$ value in Table 1 below.

**Table 1**

| Pigment | Chemical Composition | $d_{50}$/μm | Color |
|---|---|---|---|
| White pigments | $ZnS/TiO_2/BaSO_4/2PbCO_3 \cdot Pb(OH)_2$ | ~3 | White |
| Iron oxides | $Fe_2O_3$/FeOOH | 3-5 | Yellow, orange, red, brownish |
| Soot pigments | soot, graphite, graphite dust | <1 | Black, silver |
| Lead chromates | $Pb_2CrO_5/PbCrO_4$ | 1-3 | Yellow, orange |
| Spinel-type pigments | $CoAl_2O_4/Co(Al, Cr)_2O_3$ | <1 | Blue, green, red, violet; yellow |
| Organic pigments | Phthalocyanines | <20 | Blue, green |

As can be seen, typical pigments possess very low particle sizes which results in a very good color homogeneity.

**SMC production**

In the compounding process the basic ingredients of the SMC matrix, i.e. thermosetting resin, thickening agent (unless added to the pigment paste, cf. below) and further optional ingredients such as initiator (curing agent), inhibitor (stabilizing agent), mold release agent, one or more fillers, additives or thermoplasts are mixed in a batch process in a mixer to form a resin paste.

The pigment paste which gives the SMC or the molded part its final color is usually prepared in a separate mixing process by mixing pigments pastes as explained above. The thickening agent is preferably added to the pigment paste according to the formulation below.

Basic composition of resin paste and pigment paste in SMC production (qualitative):

| Resin Paste | Pigment Paste |
|---|---|
| Thermosetting resin | Colored pigment pastes |
| Initiator | White pigment paste |
| Inhibitor | Thickening agent |
| Mold release agent | |
| Filler(s) | |
| Additive(s) | |
| Thermoplastic additive(s) | |

As the thickening reaction starts immediately after mixing the thickenable thermosetting resin and the thickening agent, as shown in Schemes 1 to 4, the resin paste and the pigment paste containing the thickening agent are mixed on-line in a predetermined ratio in suitable static or dynamic mixers immediately before the production of the SMC.

The resulting mixture is pumped into a so-called doctor box which is a box with a slit on the lower side. A carrier film (e.g. of polyethylene or polyamide) is moving in production direction underneath the doctor box, thus applying a resin film to the carrier film. The thickness of the resin film is determined by the height of the slit. The carrier film is then moving underneath a fiber cutter that cuts the continuous reinforcing fibers (rovings) into pieces of typically 25 mm to

50 mm length. After that a second resin-covered carrier film is placed on the resin- and fiber-covered first carrier film to form a sandwich like sheet of a resin-impregnated fiber mat. This sheet is finally moved through a compacting unit where the impregnation of the fibers is improved by the pressure applied by the rollers of the compacting unit.

After the compacting step the SMC is wound onto rolls or folded into cardboard boxes and stored in a controlled environment for maturation which usually takes several days, depending on the formulation. Maturation means here the thickening process which leads to a cuttable, non-sticky and easy to handle sheet of fiber reinforced thermosetting resin where the carrier film can be removed without resin sticking to the film.

For further information on the SMC process see e.g. Hamid G. Kia, "Sheet moulding compounds - science and technology", Hanser Publishers, Munich, 1993 or Arno Gardziella, "Duroplastische Harze, Formmassen und Werkstoffe", Expert Verlag, Renningen, 2000.

In the molding process SMC sheets are cut into pieces of suitable size and shape, depending on the mold or part size. To achieve reproducible properties in the molded part the dimension and the weight of the sheets have to be kept constant. After removal of the carrier film(s) the sheets are put into the mold and the mold is closed. The molding temperature is usually between 135 and 155 °C and the molding pressure between 30 and 100 bar, depending on the size and complexity of the mold or part. The mold flow properties of the SMC itself also have a strong influence on the required molding pressure. The molding time is usually in the range of a few minutes, however very "fast" SMC formulations can be cured within e.g. 50 seconds and for very thick parts up to 10 minutes molding time can be necessary.

Molds that can stand these conditions have to be made from steel; usually they are chrome-plated to facilitate demolding and to increase the surface quality of the finished parts.

If the production numbers are less than e.g. 10 000 molded parts per year molds made of plastic, in particular thermosetting resins, can be used. Since these molds can only stand lower pressures as compared to standard steel molds, it is desirable to have sheet molding compounds which can be molded at e.g. 10 bar or even lower pressures. Sheet molding compounds suitable for these processing conditions are described in WO 99/50341.

Alkaline earth oxides or hydroxides like magnesium oxide or magnesium hydroxide which are commonly used as thickening agents as described above tend to render the SMC opaque and blurred, which makes them incompatible with the use of luminescent pigments which require a transparent compound to be effective. Surprisingly, it has now been found that by using suitable combinations of luminescent pigments, reinforcing glass fibers, thermosetting resins, and fillers a self-luminescent SMC and articles molded therefrom can be obtained which exhibit a luminescence that is strong and long-lasting enough to meet the requirements which have to be fulfilled by articles like firemen's helmets. The luminescent properties, i.e. strength and duration of afterglow, of such products are usually measured according to German standard DIN 67510.

As mentioned above, the main problem is to keep the heavy luminescent pigments in suspension and to avoid sedimentation during storage and application. Phase separation between pigments and resin paste may also occur in standard (non-luminescent) SMC during maturation and storage if the physicochemical properties of the pigments and the resin are not compatible. Surprisingly, it has now been found that the luminescent pigments used in the present invention - in spite of their particles being coarser (cf. below) and heavier than those of conventional pigments - are not prone to phase separation in the SMC. It appears that the thickening reaction of the polyester, which is anyway necessary in order to achieve satisfactory applicability and mold flow properties of the SMC, helps in avoiding phase separation of the pigment and the resin.

It is evident that the demands on a material suitable for a SMC process - i.e. a closed mold process - are completely different from those on a material that is suitable for open mold processes only, as the material is molded under high temperature and pressure where there is flow of the material which can lead to phase separation of the pigment and the thermosetting resin paste. Here e.g. the thickening of the resin paste has to ensure a sufficient fiber transport during the molding process to avoid the formation of areas in the molded part without fiber reinforcement. In this context the defilamentation of the fiber bundles plays an important role, as defilamentized fibers are not transported as easily by the resin paste during the molding process as non-defilamentized fiber bundles. However, defilamentation of the fiber bundles leads to a material with a higher homogeneity. In the case of a luminescent SMC this effect is very important as it is necessary to obtain a transparent or opaque material without the usage of white pigments that cover the fibers in conventional SMC. As there are no white pigments, chemical compatibility between the fiber sizing and the resin paste is important to obtain a homogeneously pigmented luminescent SMC.

The present invention provides a luminescent molding compound, in particular a luminescent sheet molding compound. As mentioned above several fundamental facts appear to be prohibitive to such a luminescent Sheet Molding Compound:

- A strong afterglow in a material composed of thermosetting resin, glass fibers, thickening agent, fillers, and additives which is usually not inherently transparent is not very likely as the luminescent pigment can only be fully effective in the surface layer of the material. The light emitted by luminescent pigment particles being several millimeters beneath the surface of the material is partially absorbed and only a small percentage of this light is visible at the

surface.

- In conventional SMC, glass fiber patterns are not visible on the surface as white pigments are used to cover the glass fibers. As white pigments in luminescent SMC would spoil the afterglow of the luminescent pigment, such pigments cannot be used in such an application - at least not in the amounts required for a significant effect on fiber coverage - and, as a consequence, glass fibers will be visible at the surface which is not accepted by customers.
- Color homogeneity is obtained not only by colored pigments but also white pigment pastes help in achieving a homogeneous color. As white pigment pastes cannot be used in substantial amounts in connection with luminescent pigments, the homogeneous color of the SMC or the molded part, respectively, must be provided by the formulation itself, which is hard to achieve.
- Small particle sizes of conventional pigments are also contributing to color homogeneity in the compound or molded part, respectively. Luminescent pigments have much higher particle sizes (see below) than conventional pigments, which adversely affects color homogeneity.
- The use of thickening agents that render the compound blurred and opaque is also negatively affecting a strong afterglow or the effective use of luminescent pigments in the compound.

Surprisingly, it was now found that with the formulations of the present invention all above-mentioned problems can be overcome and a luminescent Sheet Molding Compound possessing a strong and long lasting afterglow and showing surprisingly high color homogeneity in a bright and a dark environment and low fiber print on the surface can be provided.

In Table 2 a brief overview about selected photoluminescent pigments in the market is given. As one can see the particle sizes of these pigments are much higher than those of conventional pigments. For physical reasons these pigments can not be produced in smaller particle sizes, since by grinding them to smaller particle sizes the intensity of the afterglow is substantially reduced (as the quantum yield of the luminescence or phosphorescence, respectively, is lowered).

To give an idea about the difference in particle numbers resulting from that fact one can calculate with a particle size of 1 μm for a conventional pigment and 18.6 μm for a strontium aluminate pigment available by Leuchtstoffwerk (LSW) and showing a good compromise between particle size and strength of afterglow.

As the volume of a sphere is proportional to $r^3$, the volume of one particle of luminescent pigment LSW N1/SL is higher by a factor of

$$\frac{9.3^3}{0.5^3} \cong 6435,$$

i. e. the number of particles in the same volume is in the luminescent pigment LSW N1/SL lower by a factor of 6435 compared to a conventional pigment with a particle size of 1 μm. Considering a pigment with a particle size of 25 μm this factor is 15625 and with a pigment having a particle size of 34 μm even 39304.

Nevertheless, it was now found that with pigments possessing such particle sizes it is possible to obtain a homogenously pigmented SMC and molded parts thereof.

**Table 2**

| Producer | Type | Chemical composition | $d_{50}$ [μm] | $E_{max}$ [nm] | Luminescent behavior | |
|---|---|---|---|---|---|---|
| | | | | | According to DIN 67510,Teil 1 | $mcd/m^2$ @60min |
| Leuchtstoffwerk | Leutalux® N1/SL | Strontium aluminate; Eu, Dy | 18.6 | 520 | 254/36-2000-W-K | 36 |
| Leuchtstoffwerk | Leutalux® N1/S | ZnS.Cu.Co | 34 | 528 | 27/4,9-1000-W-K | 4.9 |
| Honeywell | Lumilux® SN-F3 | Strontium aluminate | 17 | 520 | 190/27-2600-W-K | 27 |
| Honeywell | Lumilux® SN-F2 | Strontium aluminate | 25 | 520 | 270/40-3200-W-K | 40 |

(continued)

| Producer | Type | Chemical composition | $d_{50}$ [μm] | $E_{max}$ [nm] | Luminescent behavior | |
|---|---|---|---|---|---|---|
| | | | | | According to DIN 67510,Teil 1 | mcd/m$^2$ @60min |
| Honeywell | Lumilux® SN-F5 | Alkaline earth aluminate | 4.2 | 520 | 90/12-1300-W-K | 12 |
| Special Chem S.R.L. | TPY-9E | SrO, $Al_2O_3$, $B_2O_3$, $Eu_2O_3$, $Dy_2O_3$, CaO | 10-20 | 580 | | 65 |
| RC Tritec AG | Storelite® RNS | ZnS.Cu | 30 | 530 | 12/0,72-100-g-g | 0.72 |
| RC Tritec AG | Storelite® RNS-extra | ZnS.Cu | 30 | 530 | 139/21-2000-g-g | 21 |
| RC Tritec AG | Storelite® TOP | $Al_2O_3$ | 10-40 | 520 | 304/42-3600-g-g | 42 |
| Samco GmbH | Samcolux® PLJ Typ 6 | | 15-30 | | | >50 |
| Artemis Chemicals Ltd. | SA-20 Yellow | Activated strontium aluminate | 20 | | 100/15-1100-K-K | 15 |
| Artemis Chemicals Ltd. | SA-30 Yellow | Activated strontium aluminate | 10 | | 200/15-1500-K-K | 15 |
| BETO Specialty Materials Co. | BT201 | Rare earth elements | 100-400 mesh | | | |
| Glowbug Luminescent Colours | Invisible lemon S | Organic pigment | 5 | 520 | | |
| Shandong Lunbo | LG-201 | $MO \cdot a\, Al_2O_3 \cdot b\, SiO_2 \cdot c$ Li | 20-70 | | | 45 |
| Beaver Luminescers | L-142 | Aromatic heterocycle | <5 | 540 | | |
| Beaver Luminescers | L-187 | Aromatic heterocycle | <5 | 590 | | |
| USR Optonix Inc. | Pigment 2330 LBY | ZnS | 20 | 520 | 32/3,5-320-K-W | 3.5 |
| USR Optonix Inc. | Pigment 2330 XLBY | ZnS | 30 | 530 | 40/4,6-408-K-W | 4.6 |
| USR Optonix Inc. | Pigment 2330 XLY2 | ZnS | 30 | 520 | 35/6,2-620-K-W | 6.2 |

As mentioned above, a high solubility of the sizing of the glass fibers has a positive influence on the defilamentation of the fibers in the SMC, thus contributing to a homogeneous color of the SMC, especially when it is impossible to use white pigment pastes. On the other hand, mold flow properties and the ventilation of the material during molding are affected adversely which may lead to air inclusions worsening transparency and luminescence and generally leading to rejection of the material by the customer.
The above shows that there are contradictory demands on the behavior of glass fibers in a luminescent SMC.
Some commercially available glass fiber rovings which are basically suitable for application in transparent SMC

are listed in Table 3 below.

**Table 3**

| Producer | Type | linear weight/tex | bundle tex | loss on ignition/% | moisture/ % max. | sizing acetone solubility/ % | filament diameter/ μm |
|---|---|---|---|---|---|---|---|
| Vetrotex[1)] | P 204 | 4800 | 80 | 1.2 | 0.2 | 60 | 16 |
| Vetrotex | P 204 | 2400 | 80, 100 | 1.2 | 0.2 | 60 | 16 |
| Vetrotex | P 227 | 2400 | 80 | 0.65 | ≤0.15 | 84 | 11 |
| Vetrotex | P 243 | 4000 | 80 | 0.47 | 0.1 | 84 | 11 |
| Vetrotex | P 243 | 2400 | 17,34 | 0.47 | 0.1 | 84 | 11 |
| Vetrotex | P215 | 2400 | 75 | 1.25 | <0.2 | 60 | |
| Vetrotex | 5216 | 2400 | 75 | 1.25 | <0.2 | 50 | 16 |
| Vetrotex | 5249 | 2400 | 57 | 1.2 | <0.2 | 89 | |
| Johns Manville[2)] | MultiStar 254 | 2400 | 90 | 0.95-1.35 | 0.15 | 70 | 15 |
| Owens Corning[3)] | R07 | 2400 | 75 | 1.2 | 0.15 | 60-80 | 14 |
| Owens Corning | 954 | 2400 | 80 | 0.72-1.22 | 0.08 | 70-90 | |

[1)] Saint-Gobain Vetrotex Renforcement S.A., Chambéry, France
[2)] Johns Manville, Denver CO, USA
[3)] Owens Coming, Toledo OH, USA

Another problem already addressed above is the thickening reaction. Thickening agents are commonly dispersions of alkaline earth oxides and hydroxides like e.g. MgO or $Mg(OH)_2$. These dispersions are whitish and are rendering the SMC and the molded part blurred if no other colored or white pigments are used. As a certain transparency was expected to be necessary to make a satisfactory use of the photoluminescent pigments - especially in terms of pigments being embedded in deeper layers of the material - it was expected that the use of thickening agent would spoil the afterglow of the pigment and the material would not meet the standards in terms of strength and duration of afterglow.

The use of thermoplastic additives for the compensation of the shrinkage of the pure resin was also expected to lead to problems as these thermoplastic additives are also very often rendering the compound or molded part whitish and blurred.

The same holds even more with regard to the use of fillers which are necessary for two reasons as explained above. Firstly, fillers like aluminum trihydroxide are mandatory if the material has to be fire retardant. Secondly, fillers in general act as shrinkage compensation.

As fillers are generally intransparent they have been expected to substantially decrease the duration and in particular the strength of afterglow. Especially the amount of fillers required to render the material sufficiently fire retardant for the production of equipment for fire brigades and the like was expected to decrease the afterglow to a level where molded part do not meet the standards for safety equipment.

According to the invention, a luminescent molding compound comprising

(i) a thermosetting resin,
(ii) transparent reinforcing fibers,
(iii) at least one photoluminescent pigment dispersed in the thermosetting resin,
(iv) at least one thickening agent, and
(v) optionally, one or more filler(s),
(vi) optionally, one or more thermoplastic(s),
(vii) optionally, a catalyst or initiator for curing the resin,
(viii) optionally, an inhibitor for stabilizing the compound,

(ix) optionally, an internal mold release agent

is provided.

In a preferred embodiment, the luminescent molding compound is a sheet molding compound (SMC).

The thermosetting resin is preferably an unsaturated ISO/NPG resin, i.e., a polyester resin based on isophthalic acid and neopentyl glycol.

The transparent reinforcing fibers are preferably assembled E glass rovings, i.e., rovings consisting of several bundles of E glass fibers.

The at least one photoluminescent pigment is preferably a long afterglow phosphorescent pigment or a mixture comprising at least one long afterglow phosphorescent pigment.

The photoluminescent pigments can be used in powder form or as a pigment paste comprising the photoluminescent pigment and a non-thickenable carrier resin, as mentioned above. Even sedimentation of the pigments in the pigment paste is not an issue in spite of the luminescent pigment being heavy. Anti-separation additives and the fact that the concentration of the pigments in the paste is high are obviously helpful in avoiding phase separation.

Preferably, the at least one thickening agent comprises magnesium oxide and/or magnesium hydroxide.

Preferably, the luminescent molding compounds comprise one or more fillers comprising aluminum hydroxide and/or calcium carbonate.

Another object of the invention is a luminescent article obtainable by molding and curing the luminescent molding compound of the invention.

A preferred embodiment of the luminescent article of the invention is a part of the equipment of fire brigades, police, or safety personnel, e.g. a firemen’s helmet, tools, carriers of compressed air bottles, or other safety equipment.

Another preferred embodiment of the luminescent article of the invention is a part of an electrical appliance or fitting, such as the housing of a lamp, a button, rocker or toggle of a switch, or a fuse box (breaker panel). Passive safety in buildings can be improved by the use of such article which is luminescent in the case of a power loss or damage of illuminant.

Another preferred embodiment of the luminescent article of the invention is a part of a means of public or private transportation such as an automobile, taxi, bus, train, subway, ferry, aircraft etc., e.g. the handles in the inside of the trunk of a car. Especially in the aircraft sector it is imaginable to produce certain parts from a luminescent SMC to provide luminous parts in the case of an emergency situation.

Generally speaking luminescent SMC is especially interesting when luminescent properties are necessary due to safety demands, high mechanical properties, and/or flame retardance is necessary. This combination of demands can be fulfilled in a perfect way by the material described in the present invention.

**Description of the drawings**

Figure 1 depicts the thickening behavior of an unsaturated polyester resin with MgO as thickening agent. The graph shows the increase in viscosity during the first 5.5 hours.

Figure 2 depicts the internal temperature of a sample of a vinyl ester resin being heated in an oil bath with a bath temperature of 130 °C.

Figure 3 depicts the time dependence of the density of luminous flux of a sample plate of the material of Example 1.

Figure 4 depicts the time dependence of the density of luminous flux of another sample plate of the material of Example 2.

Figure 5 depicts the time dependence of the density of luminous flux of a sample taken from a firemen’s helmet made from luminescent SMC according to Example 3 (■) and a sample taken from a firemen’s helmet painted with a luminescent paint (▲). Measurement was made according to German Industry Standard DIN 67510.

**Examples**

The invention is further illustrated in more detail by the following non-limiting examples showing exemplary applications.

**Example 1**

**Molding of a luminescent sample plate**

A typical luminescent SMC formulation is given in Table 4 below.

**Table 4**

| Ingredient | Weight/kg | Type |
|---|---|---|
| Resin | 4.000 | Iso/NPG resin[1)] |
| Filler | 2.500 | Aluminum trihydroxide[2)] |
| Thermoplast | 1.000 | Polystyrene[3)] |
| Release agent | 0.075 | Zinc stearate |
| Initiator 1 | 0.060 | Slow curing agent[4)] |
| Initiator 2 | 0.020 | Fast curing agent[5)] |
| Inhibitor | 0.020 | *p*-Benzoquinone (10% solution in MEK/styrene) |
| Thickening Agent | 0.125 | Magnesium oxide paste[6)] |
| Pigment | 1.800 | Luminescent pigment[7)] |
| Additive | 0.225 | Mold release additive [8)] |
| Reinforcement | 40% [*)] | Glass fiber[9)] |

[*)] Glass content given as weight percent of complete formulation
[1)] e.g. Distitron® SP 184 (Lonza), Distitron® 170 (Lonza) or Palatal® A 410-TV25 (DSM)
[2)] e.g. Martinal® OL 104 (Martinswerk), Martinal® ON 921 (Martinswerk) or Portaflame® SG 40 (Ankerpoort)
[3)] e.g. Empera® 622 (BP Chemicals), Lacqrene® 6541 (Total Petrochemicals) or Palapreg® H814-01 (DSM)
[4)] e.g. LUPEROX® K12 (MEK peroxide, Atofina/Arkema) or TBPB (tert-butyl perbenzoate, Degussa Initiators)
[5)] e.g. LUPEROX® K18 (MEK peroxide, Atofina/Arkema) or TBPEH-LA-M2 (*tert*-butyl peroxy-2-ethylhexanoate, Degussa Initiators)
[6)] e.g. Luvatol® MK 35, Luvatol® DH 25 or Luvatol® EH 35 (all Lehmann & Voss)
[7)] e.g. Leutalux® N1 Grün/S (Leuchtstoffwerk GmbH Heidelberg), Lumilux® SN-F2 (Honeywell) or Samcolux® PLT Type 6 (Samco)
[8)] e.g. P 9061 (BYK-Chemie)
[9)] e.g. P227/2400 tex (Saint-Gobain Vetrotex), P243/2400 tex (Saint-Gobain Vetrotex), 5249/2400 tex (Saint-Gobain Vetrotex) or R07E XI 2400 tex (Owens Coming)

All ingredients except the glass fibers were mixed in a dissolver and the SMC was produced as described in the section "SMC production". The SMC was stored at room temperature for maturation. After several days thickening had taken place according to the reaction given in section "thickening agent". After maturation or thickening, respectively, the SMC could be cut into pieces of desired size and shape and molded articles could be produced in a molding process at high temperature and high pressure. For the measurement of luminescence sample plates were molded on a chrome plated flat sample tool with a size of 250x120 $mm^2$. The molding parameters are given below:

| | |
|---|---|
| Molding force/t | 40 |
| Molding temperature/°C | 145 |
| Molding time/s | 180 |
| Pre-cut/% | 80 |

(continued)

| | |
|---|---|
| Weight/g | 210 |

Sample plates were used to measure the luminescence, or density of luminous flux, respectively. The results of this measurement are given in Fig. 3.

The classification of the luminescence of a firemen's helmet which is necessary to fulfill German Industry Standard 67510 is 10/1,1-140 W/K. The material described in this example is superior to this value.

In German Industry Standard DIN 67510 luminescent behavior is measured as follows: The luminescent articles are kept in the dark for 48 h to ensure a complete loss of luminescent properties. Afterwards samples of 50x50 $mm^2$ are illuminated with a density of luminous flux (illuminance) of 1000 lux for five minutes. The emission is recorded for two hours and time until a density of luminous flux of 0.3 $mcd/m^2$ is reached is extrapolated.

The luminescence of the formulation described here which is given by the value 12.05/1.65-270 W/K means:

Density of luminous flux after 10 min is 12.05 $mcd/m^2$
Density of luminous flux after 60 min is 1.65 $mcd/m^2$
Time until a density of luminous flux of 0.3 $mcd/m^2$ is reached is 270 min.

This means that the material fulfills the demands of this standard in terms of luminescence easily.

Color homogeneity in a bright and dark environment is sufficient for an application in the equipment of safety personnel.

## Example 2

### Molding of a luminescent tray

In a second molding trial luminescent trays have been molded with a SMC formulation given in Table 5.

**Table 5**

| Ingredient | Weight/kg | Type |
|---|---|---|
| Resin | 5.000 | Iso/NPG resin[1)] |
| Filler 1 | 2.500 | Aluminum trihydroxide[2)] |
| Filler 2 | 2.500 | Aluminum trihydroxide[3)] |
| Thermoplast | 0.250 | Polystyrene[4)] |
| Release agent | 0.300 | Zinc stearate |
| Initiator | 0.060 | Curing agent[5)] |
| Inhibitor | 0.025 | *p*-Benzoquinone (10% solution in MEK/styrene) |
| Thickening Agent | 0.125 | Magnesium oxide paste[6)] |
| Pigment 1 | 0.900 | Luminescent Pigment ($d_{50}$: 30-50 μm)[7)] |
| Pigment 2 | 0.900 | Luminescent Pigment ($d_{50}$: 15-30 μm)[8)] |

(continued)

| Ingredient | Weight/kg | Type |
|---|---|---|
| Reinforcement | 25%[*)] | Glass fiber[9)] |

[*)] Glass content given as weight percent of complete formulation
[1)] e.g. Distitron® SP 184 (Lonza), Distitron® 170 (Lonza) or Palatal® A 410-TV25 (DSM)
[2)] e.g. Martinal® OL 104 (Martinswerk), Martinal® ON 921 (Martinswerk) or Portaflame® SG 40 (Ankerpoort)
[3)] e.g. ALOLT 38 AF (Magyar Aluminium) or Martinal ON 310 (Martinswerk)
[4)] e.g. H1682 (DuPont) or Microthene® FN 519-00 (Equistar Chemicals)
[5)] e.g. CH-50-AL (1,1-di-(*tert*-butylperoxy)cyclohexane, Degussa Initiators)
[6)] e.g. Luvatol® MK 35, Luvatol® DH 25 or Luvatol® EH 35 (all Lehmann & Voss)
[7)] e.g. Storelight Pigment S (RC Tritec) or Leutalux® N1 Grün/S (Leuchtstoffwerk GmbH Heidelberg) or Samcolux® PLT Type 6 (Samco)
[8)] e.g. Leutalux® N1 Grün/SL (Leuchtstoffwerk GmbH Heidelberg), Lumilux® SN-F2 (Honeywell) or Samcolux® PLJ Type 6 (Samco)
[9)] e.g. P227/2400 tex (Saint-Gobain Vetrotex); P243/2400 tex, bundle tex 17 or 34 (Saint-Gobain Vetrotex); 5249/2400 tex (Saint-Gobain Vetrotex) or R07E XI 2400 tex (Owens Coming)

All ingredients apart from glass fibers were mixed in a dissolver and the SMC was produced as described in the section "SMC production". The SMC was stored at room temperature for maturation. After several days thickening had taken place according to the reaction given in section "thickening agent".
After maturation or thickening, respectively, the SMC could be cut into pieces of desired size and shape and molded articles could be produced in a molding process at high temperature and high pressure.
The material was used to mold luminescent trays with a size of 530x325 $mm^2$.
Parameters of the molding trial are given below.

| | |
|---|---|
| Molding force/t | 200 |
| Molding temperature/°C | 155 |
| Molding time/s | 120 |
| Pre-cut/% | 80 |
| Weight/g | 780 |

Samples were cut from the luminescent trays to measure the luminescence, or density of luminous flux, respectively. The results of this measurement are given in Fig. 4. The classification of the material according to German Industry Standard DIN 67510 would be 32,8/4,73-700W/K.

**Example 3**

**Molding of a luminescent firemen's helmet with daylight pigment.**

In a third molding trial firemen's helmets have been molded with a luminescent SMC formulation given in Table 6 below.

**Table 6**

| Ingredient | Weight/kg | Type |
|---|---|---|
| Resin | 4.000 | Iso/NPG resin[1)] |
| Filler | 3.750 | Aluminum trihydroxide[2)] |
| Nanofiller | 0.800 | [3)] |
| Thermoplast | 1.500 | Polystyrene[4)] |

(continued)

| Ingredient | Weight/kg | Type |
|---|---|---|
| Release agent | 0.075 | Zinc stearate |
| Initiator 1 | 0.060 | Slow curing agent[5)] |
| Initiator 2 | 0.020 | Fast curing agent[6)] |
| Inhibitor | 0.020 | *p*-Benzoquinone (10% solution in MEK/styrene) |
| Thickening Agent | 0.170 | Magnesium oxide paste[7)] |
| Pigment 1 | 1.070 | Luminescent pigment[8)] |
| Pigment 2 | 0.140 | Luminescent pigment[9)] |
| Additive | 0.225 | Mold release additive[10)] |
| Reinforcement | 35%[*)] | Glass fiber[11)] |

*) Glass content given as weight percent of complete formulation
1) e.g. Distitron® SP 184 (Lonza), Distitron® 170 (Lonza) or Palatal® A 410-TV25 (DSM)
2) e.g. Martinal® OL 104 (Martinswerk), ALOLT 38 AF (Magyar Aluminium) or Portaflame® SG 40 (Ankerpoort)
3) e.g. Micro Mica W1 (Micro Minerals) or Sachtosperse® HUD ($BaSO_4$, Sachtleben Chemie)
4) e.g. Empera® 622 (BP Chemicals), Lacqrene® 6541 (Atofina) or Palapreg® H814-01 (DSM)
5) e.g. LUPEROX® K12 (MEK peroxide, Atofina/Arkema) or TBPB (*tert*-butyl perbenzoate, Degussa Initiators)
6) e.g. LUPEROX® K18 (MEK peroxide, Atofina/Arkema) or TBPEH-LA-M2 (*tert*-butyl peroxy-2-ethylhexanoate, Degussa Initiators)
7) e.g. Luvatol® MK 35, Luvatol® DH 25 or Luvatol® EH 35 (all Lehmann & Voss)
8) e.g. Leutalux® N1 Grün/SL (Leuchtstoffwerk GmbH Heidelberg), Lumilux® SN-F2 (Honeywell) or Samcolux® PLJ Type 6 (Samco)
9) e.g. DualGlo® JTE5585 yellow pigment (DualGlo Ltd.) or Lumilux® effect sipi yellow (Honeywell)
10) e.g. P 9061 (BYK-Chemie)
11) e.g. P227/2400 tex (Saint-Gobain Vetrotex); P243/2400 tex, bundle tex 17 or 34 (Saint-Gobain Vetrotex); 5249/2400 tex (Saint-Gobain Vetrotex) or R07E XI 2400 tex (Owens Coming)

All ingredients apart from glass fibers were mixed in a dissolver and the SMC produced as described in the section "SMC production". The SMC was stored at room temperature for maturation. After several days thickening had taken place according to the reaction given in section "thickening agent".
After maturation or thickening, respectively, the SMC could be cut into pieces of desired size and shape and molded articles could be produced in a molding process at high temperature and high pressure.
Parameters of the molding trial are given below.

| | |
|---|---|
| Molding force/t | 50 |
| Molding temperature/°C | 140 |
| Molding time/s | 100 |
| Weight/g | 600 |
| Pre-cut/mm×mm | 150×150 |

By the usage of the daylight pigment the firemen's helmet possesses a high visibility also in a bright environment, i.e. in normal daylight. The afterglow however is not affected adversely. The strength and duration of afterglow in comparison to a firemen's helmet with luminescent paint which is commercially available is given in Fig. 5. As can be

seen, especially the strength and duration of afterglow is much better (by a factor of approximately 4) in the firemen's helmet produced from luminescent SMC which increases safety of firemen in working situations with poor illumination as they can be seen by colleagues from a higher distance in the dark or e. g. in working conditions where there is a lot of smoke. Characterization of the luminescent behavior is 86,6/11,2-1118W/K for the helmet from luminescent SMC and 21/2,3-295W/K for the painted helmet.

The mechanical properties of SMC for firemen's helmets are given in Table 7 below. The non-luminescent formulation EJ 31508 fulfills German Industry Standard DIN EN 443. The luminescent formulations EJ 32095 and EJ 32106 that have not been tested for their luminescent properties are superior to EJ 31508 in terms of mechanical properties.

**Table 7**

| | Standard | Unit | EJ 31508 | EJ 32095 | EJ 32106 |
|---|---|---|---|---|---|
| **Density** | ISO 1183 A | $g/cm^3$ | 1.63 | 1.69 | 1.76 |
| **Shrinkage** | ISO 2577 | % | 0.02 | 0.17 | 0.12 |
| **Tensile modulus** | ISO 527 | $N/mm^2$ | 9260 | 13000 | 13150 |
| **Flexural modulus** | ISO 14125 | $N/mm^2$ | 7980 | 10690 | 11610 |
| **Tensile strength** | ISO 527 | $N/mm^2$ | 92 | 118 | 126 |
| **Flexural strength** | ISO 14125 | $N/mm^2$ | 180 | 220 | 231 |
| **Impact strength** | ISO 179 | $kJ/m^2$ | 90 | 83 | 99 |

## Claims

**1.** A luminescent molding compound comprising

(i) a thermosetting resin,
(ii) transparent reinforcing fibers,
(iii) at least one photoluminescent pigment dispersed in the thermosetting resin,
(iv) at least one thickening agent, and
(v) optionally, one or more filler(s),
(vi) optionally, one or more thermoplastic(s),
(vii) optionally, a catalyst or initiator for curing the resin,
(viii) optionally, an inhibitor for stabilizing the compound,
(ix) optionally, an internal mold release agent.

**2.** The luminescent molding compound of claim 1 which is a sheet molding compound.

**3.** The luminescent molding compound of claim 1 or 2, wherein the thermosetting resin is an ISO/NPG polyester resin.

**4.** The luminescent molding compound of any of claims 1 to 3, wherein the transparent reinforcing fibers are assembled E glass rovings.

**5.** The luminescent molding compound of any of claims 1 to 4, wherein the at least one photoluminescent pigment comprises at least one long afterglow phosphorescent pigment.

**6.** The luminescent molding compound of any of claims 1 to 5, wherein the at least one thickening agent comprises magnesium oxide and/or magnesium hydroxide.

**7.** The luminescent molding compound of any of claims 1 to 6, wherein the filler(s) comprise aluminum hydroxide and/or calcium carbonate.

**8.** A luminescent article obtainable by molding and curing the luminescent molding compound of any of claims 1 to 7.

**9.** The luminescent article of claim 8 which is part of the equipment of fire brigades, police or safety personnel.

**10.** The luminescent article of claim 8 which is part of a domestic electrical appliance.

**11.** The luminescent article of claim 8 which is part of an automobile, ship or aircraft.

Fig. 1

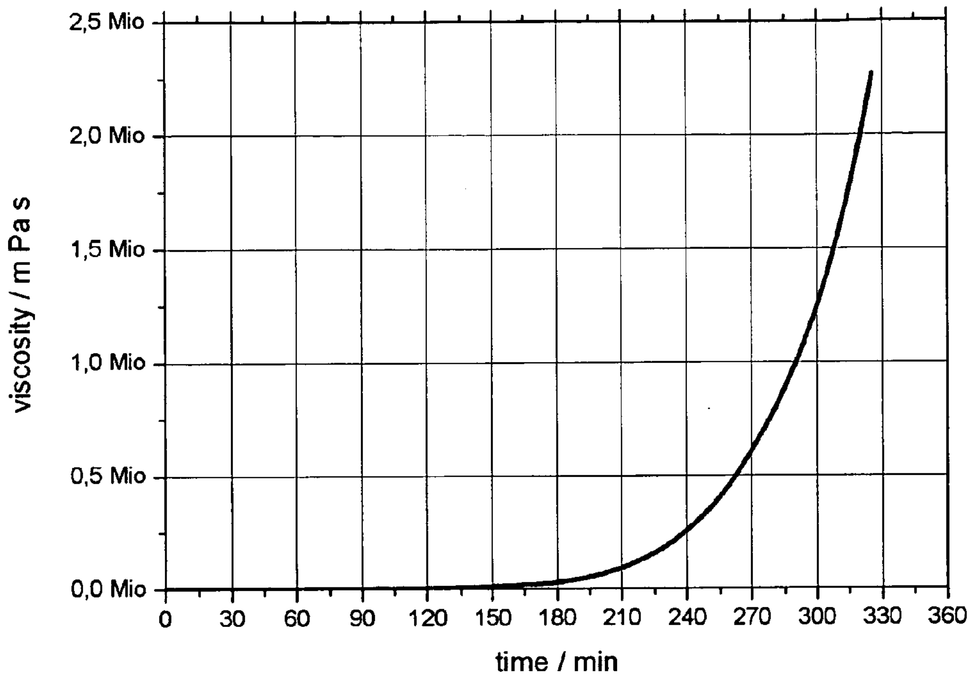
2,5 Mio
2,0 Mio
1,5 Mio
1,0 Mio
0,5 Mio
0,0 Mio
viscosity / m Pa s
0
30
60
90
120
150
180
210
240
270
300
330
360
time / min

Fig. 2

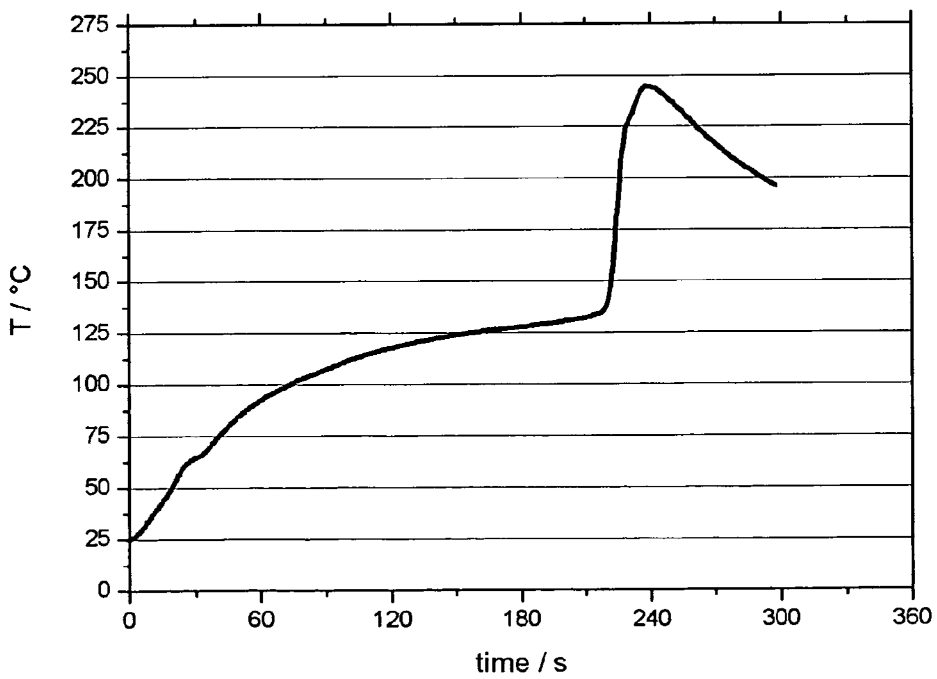
275
250
225
200
175
150
125
100
75
50
25
0
T / °C
0
60
120
180
240
300
360
time / s

Fig. 3

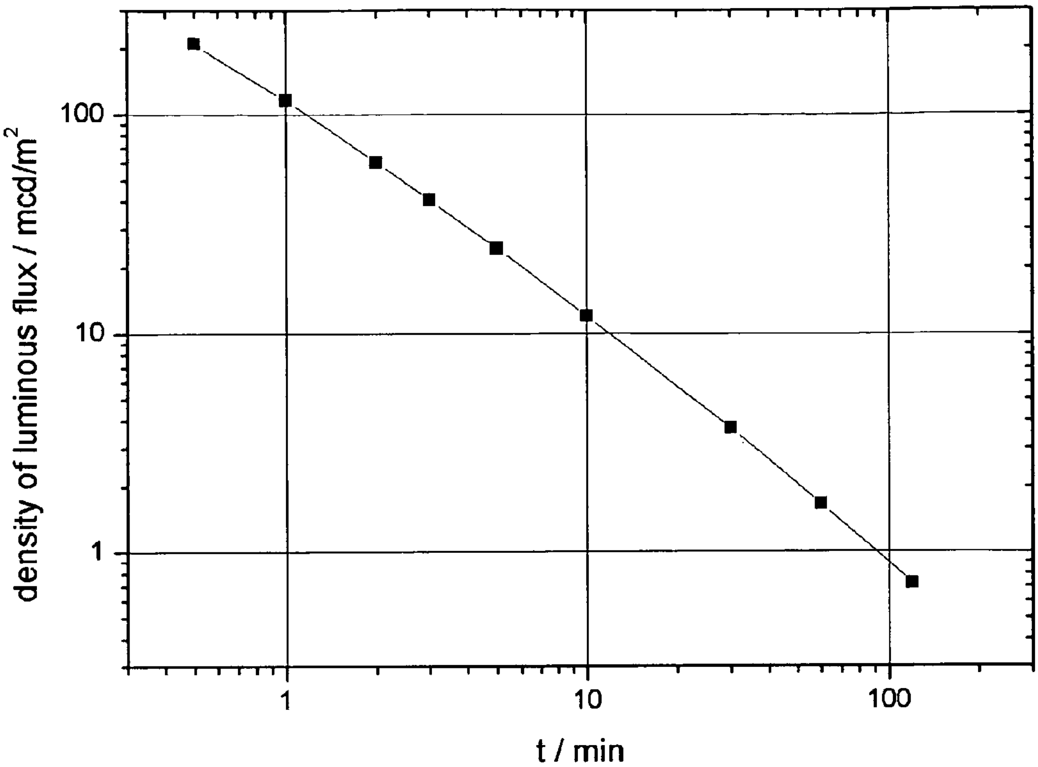
density of luminous flux / mcd/m2
100
10
1
1
10
100
t / min

Fig. 4

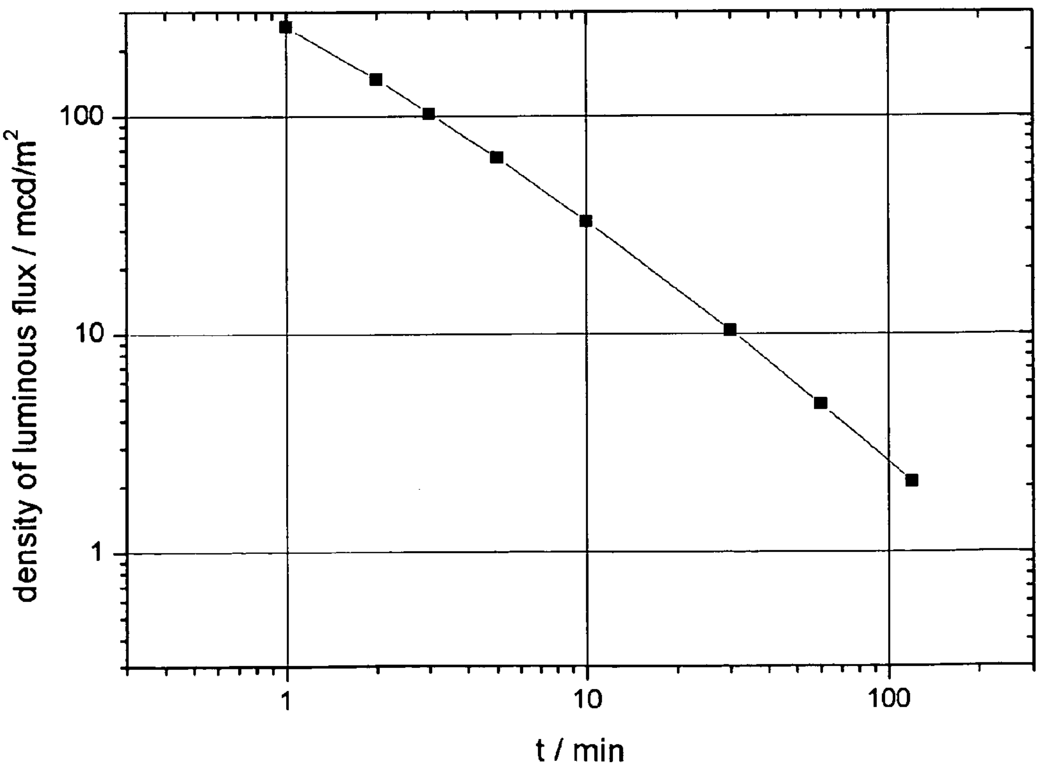
density of luminous flux / mcd/m2
100
10
1
1
10
100
t / min

Fig. 5

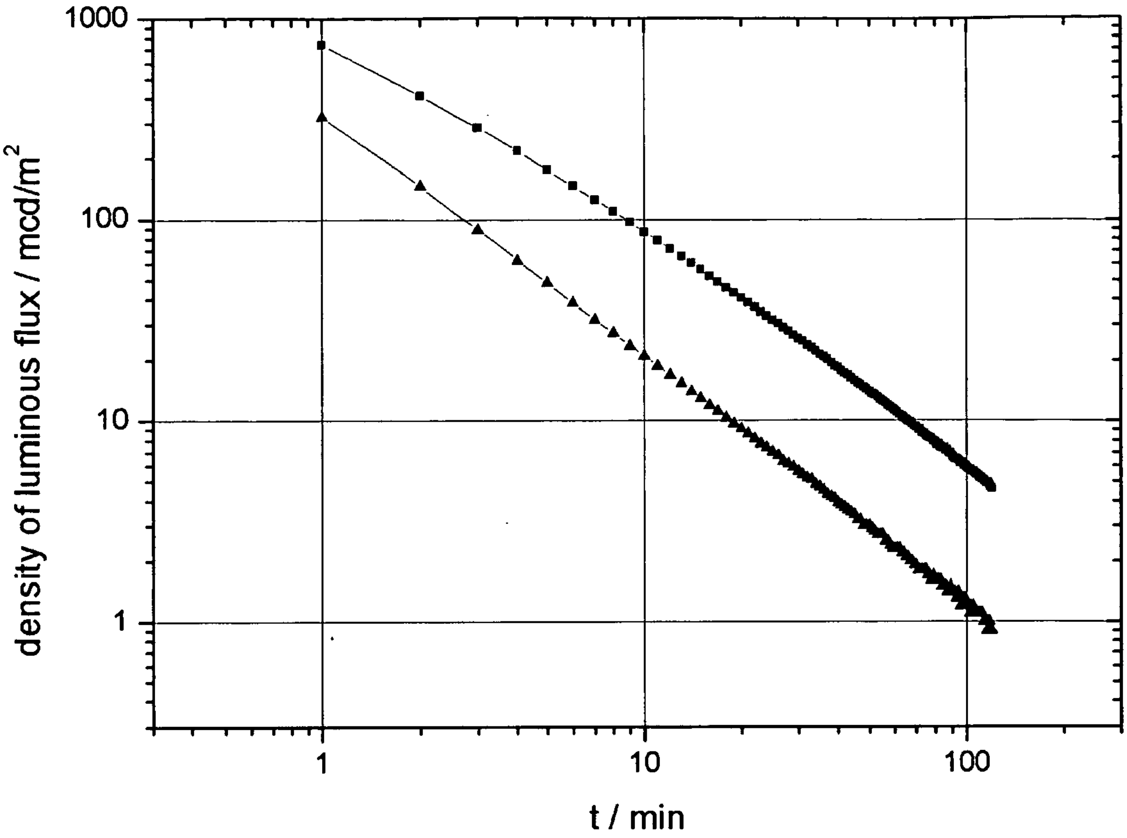

European Patent Office

# EUROPEAN SEARCH REPORT

Application Number
EP 06 00 2045

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DE 198 28 586 A1 (ZEON KASEI CO. LTD., TOKIO/TOKYO, JP) 21 January 1999 (1999-01-21) * abstract * * page 2, line 1 - page 3, line 13 * * page 4, lines 24-49 * * page 9, line 43 - page 11, line 40 * * page 12, line 5 - page 14, line 53 * * tables 1,2 * ----- | 1-11 | INV. C09K11/02 C09K11/08 |
| Y,D | US 6 207 077 B1 (BURNELL-JONES PETER) 27 March 2001 (2001-03-27) * the whole document * ----- | 1-11 | |
| A | US 3 835 088 A (TAKAMIYA Y,JA ET AL) 10 September 1974 (1974-09-10) ----- | | |
| A | PATENT ABSTRACTS OF JAPAN vol. 1997, no. 11, 28 November 1997 (1997-11-28) & JP 09 188770 A (NIPPON ZEON CO LTD), 22 July 1997 (1997-07-22) * abstract * ----- | | TECHNICAL FIELDS SEARCHED (IPC) C09K |
| A | PATENT ABSTRACTS OF JAPAN vol. 1997, no. 11, 28 November 1997 (1997-11-28) & JP 09 183122 A (NIPPON ZEON CO LTD), 15 July 1997 (1997-07-15) * abstract * ----- | | |

The present search report has been drawn up for all claims

| Place of search | Date of completion of the search | Examiner |
|---|---|---|
| Munich | 27 April 2006 | Heer, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 06 00 2045

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2006

| Patent document cited in search report | Publication date | Patent family member(s) | Publication date |
|---|---|---|---|
| DE 19828586 A1 | 21-01-1999 | FR 2765233 A1 | 31-12-1998 |
| | | JP 11021440 A | 26-01-1999 |
| US 6207077 B1 | 27-03-2001 | WO 0160943 A1 | 23-08-2001 |
| US 3835088 A | 10-09-1974 | GB 1410115 A | 15-10-1975 |
| | | JP 1041535 C | 23-04-1981 |
| | | JP 48076788 A | 16-10-1973 |
| | | JP 55032728 B | 27-08-1980 |
| JP 09188770 A | 22-07-1997 | NONE | |
| JP 09183122 A | 15-07-1997 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4759453 A
- US 5692895 A
- EP 0416436 A1
- WO 0194496 A1
- US 5374377 A
- WO 0100748 A1
- WO 0160943 A1
- US 6599444 B2
- US 6905634 B2
- GB 723967 A
- US 6186634 B
- DE 10047677 A1
- WO 9950341 A


### Non-patent literature cited in the description


- Römpp Chemie-Lexikon. Thieme-Verlag, 1995
- **HAMID G. KIA.** Sheet Moulding Compounds - Science and Technology. Hanser Publishers, 1993
- **HAMID G. KIA.** Sheet moulding compounds - science and technology. Hanser Publishers, 1993
- **ARNO GARDZIELLA.** Duroplastische Harze, Formmassen und Werkstoffe. Expert Verlag, 2000